# EUROPÄISCHE PATENTANMELDUNG

(11) **EP 3 205 554 A1**
(43) Veröffentlichungstag der Anmeldung: **16.08.2017**
(21) Anmeldenummer: 17151907.7
(22) Anmeldetag: 18.01.2017
(51) Int. Cl.: B62B 1/14, B62B 1/12, B62B 1/26

(54) **TRANSPORTKARRE**

(30) Priorität: 12.02.2016 DE 102016102496
(71) Anmelder: Abel, Helmut, 78600 Maisons-Laffitte (FR)
(72) Erfinder: Abel, Helmut, 78600 Maisons-Laffitte (FR); Abel, Céline, 78600 Maisons-Laffitte (FR); Abel, Diane, 78600 Maisons-Laffitte (FR)
(74) Vertreter: Westphal, Mussgnug & Partner Patentanwälte mbB

(57) **Zusammenfassung**

Gegenstand der Erfindung ist eine Transportkarre 40, die im Wesentlichen aus einem U-förmigen Bügel 3 besteht, zwischen dessen vertikalen Streben 4, 4' horizontale Querstreben in Form von Rundrohren etagenförmig übereinander angeordnet sind. Diese Querstreben 5 - 9 weisen mehrere nach oben stehende Halteelemente, z. B. in Form von schrägstehenden Stiften 11 bis 35 oder Bolzen auf, an welchen Tragtaschen mit ihren Henkeln befestigbar sind.

## Beschreibung

Die Erfindung betrifft eine zweirädrige, handgeführte Transportkarre der im Oberbegriff des Anspruchs 1 bzw. 13 genannten Art.

Eine Vielzahl von derartigen Transportkarren wird im Handel angeboten und zwar in Form von starren Transportkarren, sogenannten Sackkarren, als auch in Form von Falttransportkarren. Letztere sind insbesondere für den Privatgebrauch geeignet, da bei vielen Ausführungsformen die Räder, die Ladeschaufel sowie der als Schubelemente dienende Bügel einklappbar sind, sodass sie problemlos im Kofferraum eines Kraftfahrzeuges verstaut werden können. Auch sind z. B. aus DE 20 2009 010 767 U1 Transportkarren bekannt, deren Plattform zur Festlegung des Transportgutes mit Spanngurten versehen ist.

Die bekannten Transportkarren eignen sich zwar für den Transport von blockartigem oder kubischem Transportgut, z. B. gefüllten Kisten, Kartons und dergleichen, die stapelbar sind. Es fehlen jedoch vor allem zweirädrige, handgeführte Transportkarren, an welchen mit Waren gefüllte, handelsübliche Tragetaschen mit ihren Traghenkeln oder Tragriemen problemlos befestigt und sicher befördert werden können.

Diese Problematik ist auch aus DE 20 2013 003 854 U1 bekannt. Zur Lösung dieses Problems hat man mit dieser Veröffentlichung ein speziell ausgebildetes Tragetaschenset zum Einsetzen in Einkaufswagen vorgeschlagen.

Es fehlt aber eine zum Transport von handelsüblichen Tragtaschen bzw. Beuteln geeignete Transportkarre. Solche formunbeständigen Tragtaschen mit Henkeln werden in großer Zahl, in verschiedenen Größen und aus ganz verschiedenen Materialien bestehend im Handel angeboten und gern von Kunden verwendet.

Diese flexiblen Tragtaschen sind faltbar und passen sich dem eingefüllten Transportgut durch Formveränderung weitestgehend an.

Problematisch ist es dagegen, eine derartige mit Waren, insbesondere Lebensmitteln gefüllte Tragtasche und insbesondere mehrere Tragtaschen mit einer herkömmlichen zweirädrigen Transportkarre zu befördern. Zum einen ist es schwierig, eine prall mit Waren gefüllte Tragtasche, welche auf die Ladeschaufel der Transportkarre gestellt werden kann, zu transportieren, da die Tasche schon bei geringster Bewegung von der Schaufel fallen kann, weil der Tascheninhalt zwangsläufig nicht lagebeständig ist und die dünnwandige Tasche nachgibt und sich in alle Richtungen hin verformt.

Mit Gurten oder Schnüren lässt sich eine derartige formveränderliche Tasche auch nur schlecht festlegen, da das Befestigungsmittel entweder von der glatten und meist bauchigen Tasche abrutscht oder das häufig druckempfindliche Transportgut, z. B. Lebensmittel, beschädigt.

Noch schwieriger oder gar unmöglich ist es, eine zweite vollgefüllte Tragtasche auf die auf der Ladeschaufel befindliche erste Tragtasche zu platzieren. Einerseits hat die zweite Tragtasche auf der ersten keinen festen Halt. Andererseits lässt es sich nicht vermeiden, dass das in der ersten Tragtasche befindliche Transportgut, z.B. druckempfindliche Lebensmittel, beschädigt wird.

So liegt der vorliegenden Erfindung die Aufgabe zugrunde, eine zweirädrige, handgeführte Transportkarre der aus DE 197 13 33 U bekannten Art zu schaffen, mit welcher ohne Schwierigkeit und ohne die genannten Nachteile mit Waren gefüllte Tragtaschen befördert werden können.

Gelöst wird diese Aufgabe durch die Merkmale des Anspruchs 1.

Besondere Gestaltungen der mit Anspruch 1 angegebenen Halteelemente sind mit den Ansprüchen 2 bis 8 vorgeschlagen.

Die weitere Gestaltung der Transportkarre ist Gegenstand der Ansprüche 9 bis 12.

Eine Modifikation der Transportkarre ist mit Anspruch 13 gekennzeichnet.

Der Gegenstand der Erfindung ist nachstehend anhand verschiedener Ausführungsbeispiele im Einzelnen erläutert. In den Zeichnungen zeigen:
- Fig. 1: Vorderansicht einer erfindungsgemäßen Transportkarre,
- Fig. 2: Transportkarre gemäß Figur 1 in Seitenansicht, in Pfeilrichtung A gesehen,
- Fig. 3: vergrößerter Schnitt eines Halteelementes längs der Linie B - B in Figur 1 nach einem ersten Ausführungsbeispiel,
- Fig. 4: Schnitt entsprechend Figur 3 eines Halteelementes nach einem zweiten Ausführungsbeispiel,
- Fig. 5: Seitenansicht einer beladenen Transportkarre,
- Fig. 6: Teil-Vorderansicht einer Transportkarre im Bereich einer Querstrebe nach einer zweiten Ausführungsform,
- Fig. 7: vergrößerter Schnitt längs der Linie D - D in Figur 6 mit zungenförmigen Halteelementen,
- Fig. 8: Teilansicht der Transportkarre gemäß Figur 1 mit eingehängter Tragtasche,
- Fig. 9: Vorderansicht einer erfindungsgemäßen Transportkarre nach einem weiteren Ausführungsbeispiel,
- Fig. 10: Teil-Vorderansicht einer Transportkarre im Bereich zweier Querstreben nach einem dritten Ausführungsbeispiel,
- Fig. 11: Teil-Vorderansicht einer Transportkarre nach einem vierten Ausführungsbeispiel,
- Fig. 12: Vorderansicht einer Transportkarre nach einem fünften Ausführungsbeispiel und
- Fig. 13: vergrößerter Schnitt längs der Linie E-E in Fig. 12.

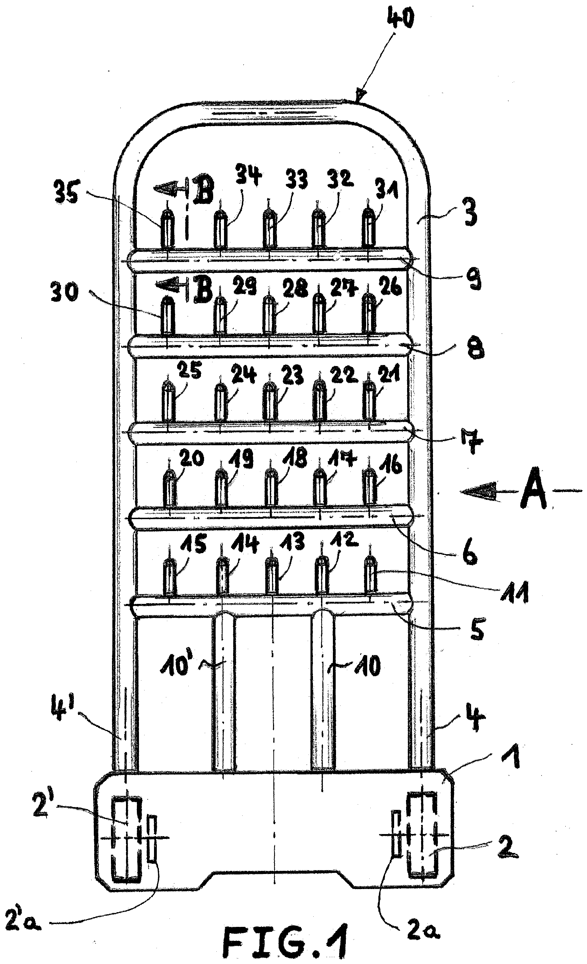

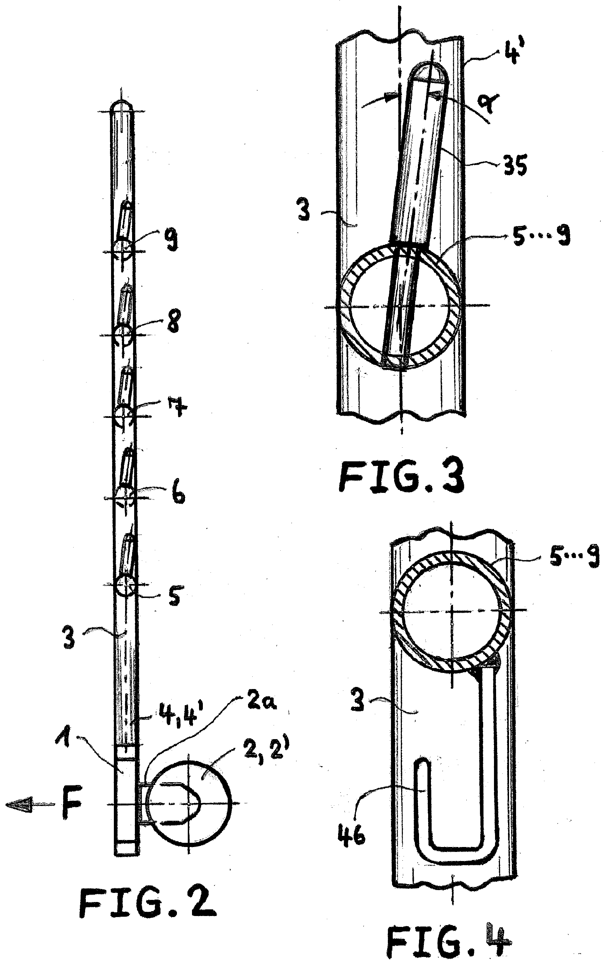

Wie die Figuren 1 und 2 zeigen, besteht die erfindungsgemäße Transportkarre 40 im Wesentlichen aus einem als Schubelement dienenden U-förmigen Bügel 3, dessen als vertikale Streben ausgebildete Schenkel 4, 4' bodenseitig mit einer Metallplatte 1 verbunden sind, an welcher in Fahrtrichtung F gesehen rückseitig Lagerböcke 2a, 2'a für Laufräder 2, 2' angebracht sind.

Die Lagerböcke 2a, 2'a können zu Transportzwecken in die Ebene des Bügels einklappbar ausgebildet sein.

Zwischen den Schenkeln 4, 4'des Bügels 3 sind etagenförmig in etwa gleichen Abständen voneinander fünf horizontale Querstreben 5 - 9 angeordnet, die als Rundrohre ausgebildet und mit den gleichfalls als Rundrohre ausgebildeten Schenkeln 4, 4' des Bügels 3 verschweißt sind. Das untere Rundrohr 5 ist mit der Metallplatte 1 über zwei der Versteifung dienenden Rundrohre 10, 10' verbunden. Auch können anstelle von Rundrohren Vierkantrohren im Querschnitt runde oder viereckige Vollprofile z.B. aus Aluminium oder Hartholz verwendet werden.

Die Rundrohre 5 - 9 tragen nebeneinander jeweils fünf abgerundete, rundzylindrische Metallstifte, also insgesamt 25 gleichartige Stifte, die als Halteelemente im Sinne der Erfindung dienen. Die Metallstifte sind, wie Figur 3 veranschaulicht, um den Winkel α, der vorzugsweise zwischen 5 - 8° liegt, mit Bezug auf die Ebene des U-förmigen Bügels 3 nach hinten geneigt.

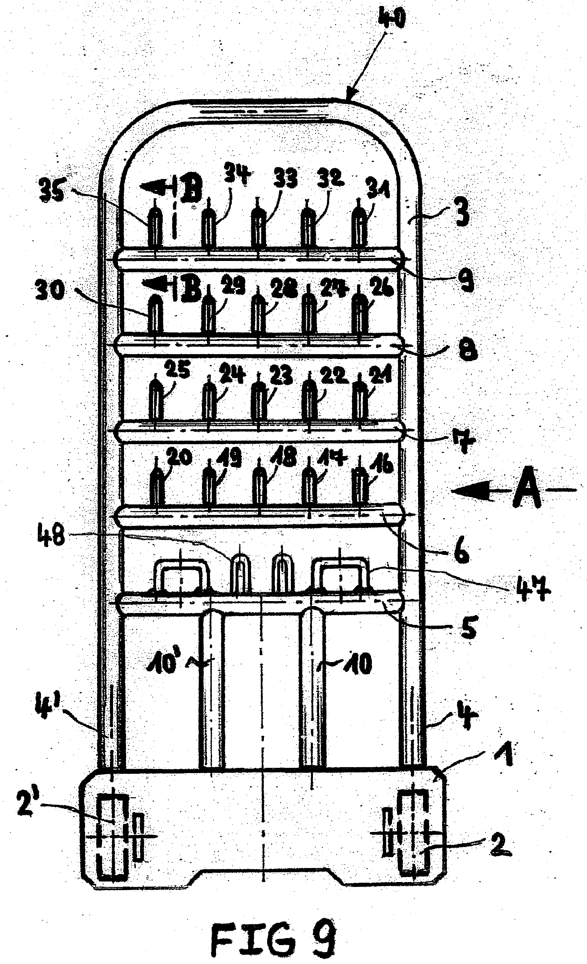

Anstelle von Metallstiften können auch schräg stehende, geschlossene Bügel 47, 48 oder nach unten weisende Haken 46 vorgesehen sein, wie die Figuren 9 bzw. 4 zeigen.

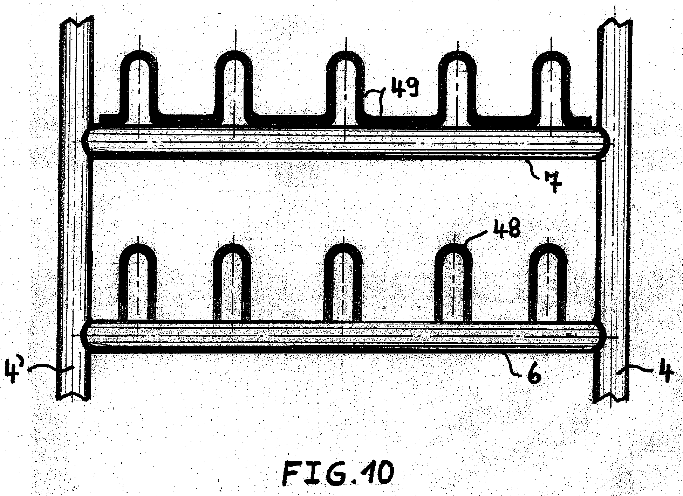

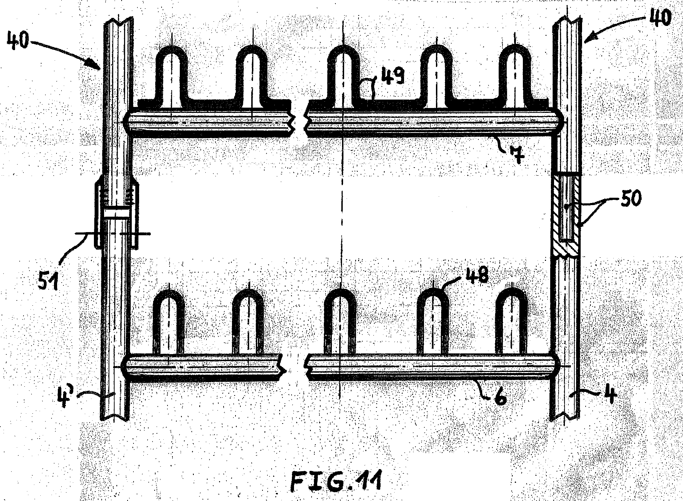

Die genannten Bügel können auch gemäß Figur 10 bzw. 11 zu einem durchgehenden Strang 49 verbunden sein, der entweder an den Querstreben 7 angebracht, z. B. mit diesen verschweißt ist, oder freitragend zwischen den vertikalen Streben 4, 4' angeordnet und an diesen befestigt ist.

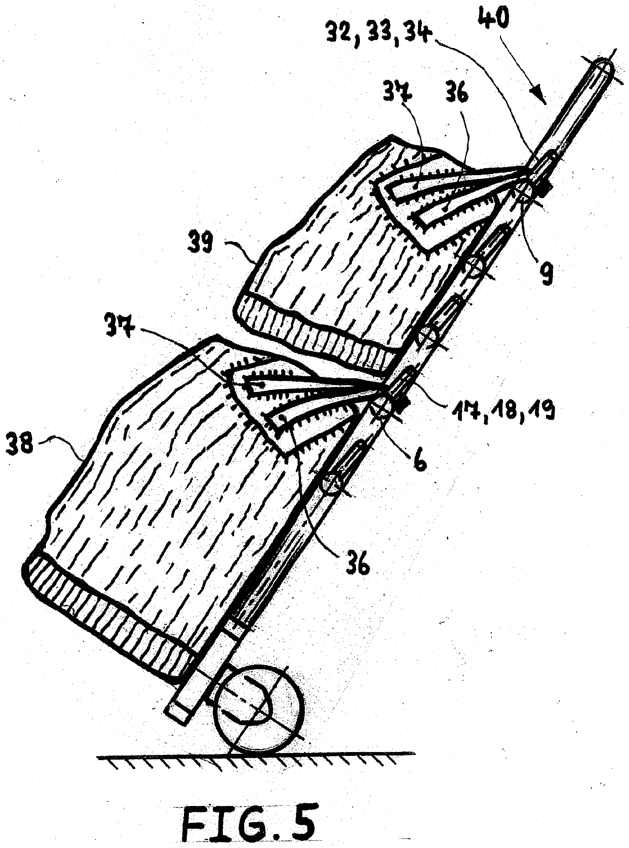

Die Verwendung der erfindungsgemäßen Transportkarren 40 ist mit Figur 5 veranschaulicht. Wie diese zeigt, sind bei diesem Ausführungsbeispiel zwei mit Transportgut gefüllte Tragtaschen 38 und 39 mit ihren Henkeln 36, 37 in die als Halteelemente dienenden Metallstifte 17, 18, 19 bzw. 32, 33, 34 eingehängt.

Das Beladen der Transportkarre erfolgt in folgender Weise.

Die Transportkarre 40 wird zunächst in Senkrechtstellung gegen die auf dem Boden stehende erste Tragtasche 38 geschoben. Hierauf zieht der Benutzer den nächstliegenden Henkel 36 der Tragtasche soweit wie möglich stramm nach oben, um diesen dann über die beiden sich im größeren Abstand befindlichen Stifte 17 und 19 zu stülpen. Danach wird der zweite Henkel 37 stramm nach oben gezogen, um diesen ebenfalls über die Stifte 17 und 19 zu stülpen.

Sollte die Tragtasche 38 zu prall gefüllt sein, könnte es schwierig werden, den Henkel 37 über die Stifte 17 und 19 zuhängen. In diesem Fall kann der Henkel 37 in den mittigen Stift 18 eingehängt werden.

Die große Anzahl der Stifte 11 - 35 gestattet die Verwendung unterschiedlich ausgebildeter Tragtaschen, deren Henkelgröße bzw. Henkellänge je nach Hersteller variieren kann.

Da die Stifte 11 - 35 nach hinten geneigt sind, können die Henkel 36 und 37 auch nicht abgleiten, sodass die Taschen stets mit der Karre verbunden bleiben.

Ein seitliches Pendeln der eingehängten Tragtaschen 38, 39 wird dadurch verhindert, dass zumindest einer der beiden Henkel 36 über die sich in größerem Abstand befindlichen Stifte 17 und 19 bzw. 32 und 34 gestülpt ist und somit die Tragtaschen seitlich fixiert sind.

Nachdem die erste Tragtasche 38 eingehängt ist, kann die zweite Tragtasche 39 in ähnlicher Weise mit ihren Henkeln 36, 37 in die am oberen Rundrohr 9 vorgesehen Stifte 32, 33, 34 so eingehängt werden, dass sie nicht auf der unteren Tragtasche 38 aufliegt, sodass das in diesem abgepackte Transportgut nicht zerdrückt wird.

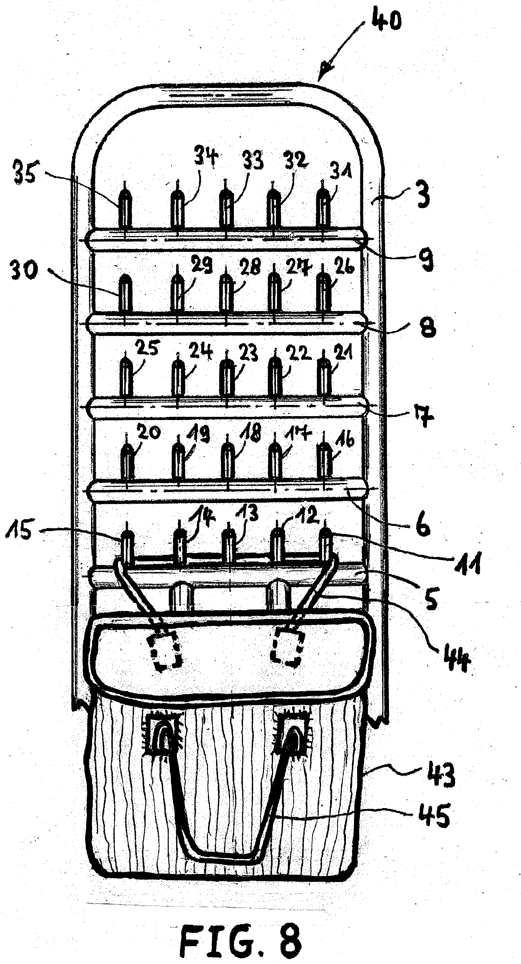

Eine andere vorteilhafte Verwendung der erfindungsgemäßen Transportkarre ist mit Figur 8 veranschaulicht.

Hiernach kann an der Transportkarre 40 in besonders einfacher Weise eine leere Tragtasche 43 eingehängt werden. So kann der eine Henkel 44 der Tragtasche 43 z. B. in die weit auseinander liegenden Stifte 11 und 15 so eingehängt werden, dass die leere Tragtasche 43 ganz an der vorderen Seite der Transportkarre 40 anliegt und nicht zur Seite pendeln kann. Der zweite Henkel 45 ist hierbei zumindest noch nicht eingehängt, sodass die Tragtasche 43 bauchig offen bleibt.

Der Benutzer kann mit einer z. B. mit zwei offenen Tragtaschen bestückten Transportkarre zum Einkauf in ein Geschäft, z. B. eine Markthalle, einfahren und aus den Regalen entnommene Waren in die noch offenen Taschen einlegen. Ist die Tragtasche 43 mit Waren gefüllt, wird der noch freie Henkel 45 entweder am zentralen Stift 13 oder den seitlichen Stiften 12 und 14 eingehängt.

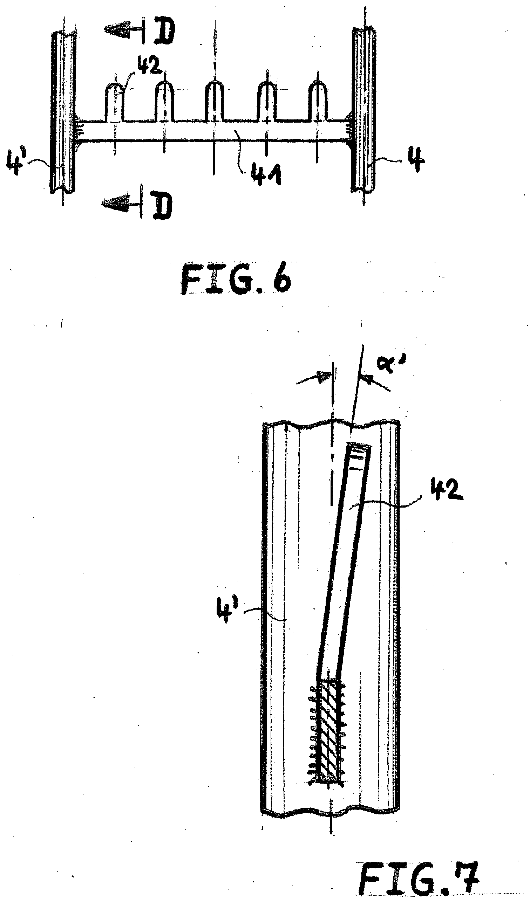

Mit den Figuren 6 und 7 sind schließlich andersartig ausgebildete Halteelemente gezeigt.

Anstelle der Rundrohre 5 bis 9 mit angeschweißten nach oben weisenden Stiften 11 bis 35 können als horizontale Querstreben zwischen den vertikalen Streben 4, 4' eingeschweißte Bleche 41 vorgesehen sein, welche anstelle der Metallstifte Zungen 42 einstückig aufweisen. Auch diese Zungen 42 sind, wie Figur 7 zeigt, zur Rückseite der Transportkarre 40 um den Winkel α' geneigt.

Tragtaschen mit ihren Henkeln können auch bei dieser Ausführungsform in gleicher Weise, wie anhand von Figur 5 bzw. 8 beschrieben, eingehängt werden.

Da Transportkarren häufig für die Beförderung in einem PKW zu sperrig sind, kann man die Schenkel 4, 4' des Schubelementes zweiteilig ausbilden, wie mit Figur 11 gezeigt ist.

Hierbei weisen die geteilten Schenkel 4, 4' entweder eine Steckverbindung 50 oder ein Gelenk 51 auf, mit welchem die Schenkelteilstücke zum Zwecke des Transportes teilbar bzw. umlegbar sind.

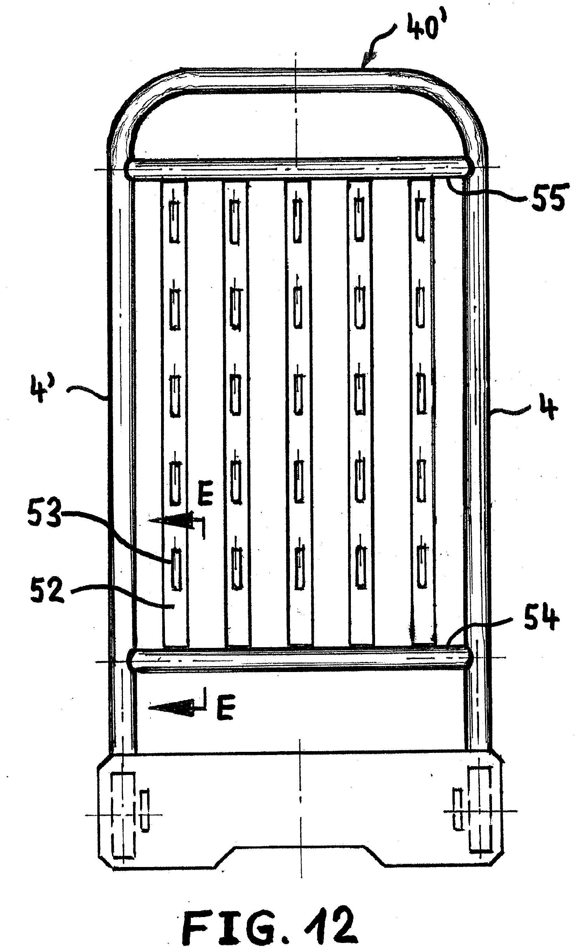

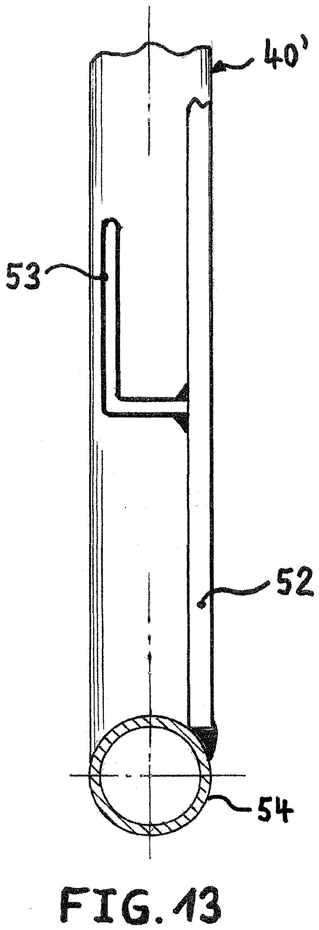

Mit den Figuren 12 und 13 ist schließlich eine andere Variante der Transportkarre 40' gezeigt, bei welcher in ähnlicher Weise wie bei der Transportkarre nach Figur 1 Tragtaschen unterschiedlicher Größe in unterschiedlichen Höhen eingehängt werden können. Bei diesem Ausführungsbeispiel verlaufen die die Halteelemente 53 aufweisenden Streben 52 vertikal und parallel zu den Schenkeln 4, 4' des U-förmigen Schubelements. Diese Streben sind endseitig mit den zwischen den Schenkeln 4, 4' eingeschweißten Querstreben 54, 55 verbunden.

Wie Figur 13 erkennen lässt sind hier die Halteelemente in Form von nach oben gerichteten Haken 53 ausgebildet.

### Bezugszeichenliste

- 1: Platte
- 2, 2': Laufrollen
- 2a, 2'a: Lagerböcke
- 3: U-förmiger Bügel als Schubelement
- 4, 4': Schenkel als vertikale Streben
- 5 - 9: Rundrohre als horizontale Streben
- 10, 10': vertikale Rundrohre als Verbindungsstreben
- 11 - 35: Metallstifte als Halteelemente
- 36, 37: Henkel
- 44, 45: Henkel
- 38, 39: Tragtaschen
- 40, 40': Transportkarre
- 41: Blech
- 42: Zungen
- 46: Haken
- 47, 48: Bügel
- 49: einstückiger Strang mit Bügeln
- 50: Steckverbindung
- 51: Gelenk
- 52: Längsstreben
- 53: Haken
- 54, 55: Querstreben

## Patentansprüche

1. Zweirädrige, handgeführte Transportkarre,
bestehend aus einem Schubelement mit zwei parallelen, vertikalen Streben, die über wenigstens eine horizontale Querstrebe miteinander verbunden sind und an deren bodennahen Enden Laufrollen drehbar gelagert sind,
**dadurch gekennzeichnet, dass** zwischen
den vertikalen Streben (4, 4') mehrere Querstreben (5-9) etagenförmig im Abstand voneinander angeordnet sind und dass an den Querstreben (5-9) mehrere in Bezug auf den Boden nach oben stehende Halteelemente (11-35, 42, 47, 48) nebeneinander vorgesehen sind, an welchen Tragtaschen (38, 39, 43) mit ihren Henkeln (36, 37, 44, 45) befestigbar sind.

2. Transportkarre nach Anspruch 1,
**dadurch gekennzeichnet, dass** die Halteelemente schräg stehende Stifte (11-35) oder Bolzen sind.

3. Transportkarre nach Anspruch 1,
**dadurch gekennzeichnet, dass** die Halteelemente Haken (46) sind.

4. Transportkarre nach Anspruch 2,
**dadurch gekennzeichnet, dass** die Halteelemente (11-35) in Bezug auf das Schubelement (3) um einen zwischen 5 und 8° liegenden Winkel nach hinten geneigt sind.

5. Transportkarre nach Anspruch 1,
**dadurch gekennzeichnet, dass** die Querstreben aus Blechen (41) bestehen, welche nach oben stehende, die Halteelemente bildende Zungen (42) aufweisen.

6. Transportkarre nach Anspruch 1,
**dadurch gekennzeichnet, dass** die Halteelemente schräg stehende, bogen- oder u-förmige, oben geschlossene Bügel (47, 48) sind, die an den Querstreben (5 - 9) befestigt sind.

7. Transportkarre nach Anspruch 6,
**dadurch gekennzeichnet, dass** die Bügel Teil eines zwischen den vertikalen Streben (4, 4') angeordneten, einstückigen Stranges (49) sind.

8. Transportkarre nach Anspruch 6 oder 7,
**dadurch gekennzeichnet, dass** die Bügel (47, 48, 49) aus gebogenem Rund- oder Flachmaterial bestehen.

9. Transportkarre nach einem der Ansprüche 1 - 8,
**dadurch gekennzeichnet, dass** das Schubelement ein vorzugsweise aus Rundrohr bestehender, U-förmiger Bügel (3) ist, dessen Schenkel (4, 4') die vertikalen Streben sind, deren bodennahe Enden über eine Platte (1) verbunden sind, an welcher Lagerböcke (2a, 2'a) für die Laufrollen (2, 2') angebracht sind.

10. Transportkarre nach Anspruch 9,
**dadurch gekennzeichnet, dass** die Lagerböcke (2a, 2'a) in die Ebene des Bügels (3) einklappbar sind.

11. Transportkarre nach Anspruch 9,
**dadurch gekennzeichnet, dass** an der Platte (1) eine starre oder umklappbare Ladeschaufel vorgesehen ist.

12. Transportkarre nach Anspruch 9,
**dadurch gekennzeichnet, dass** die Schenkel (4, 4') des U-förmigen Bügels (3) aus wenigstens zwei Teilen bestehen, welche über lösbare Steckverbindungen 50 oder Gelenke 51 miteinander verbunden sind.

13. Zweirädrige, handgeführte TRansportkarre, bestehend aus einem Schubelement mit zwei parallelen, vertikalen Streben, die über wenigstens zwei horizontale Querstreben miteinander verbunden sind und an deren bodennahen Enden Laufrollen drehbar gelagert sind,
**dadurch gekennzeichnet, dass** zwischen den horizontalen Querstreben (54, 55) mehrere, parallel zu den vertikalen Streben (4, 4') des Schubelementes angeordnete Längsstreben (52) mit nach oben offenen Halteelementen, insbesondere Haken (53), nebeneinander angeordnet sind.
